# EUROPÄISCHE PATENTSCHRIFT

(11) **EP 3 409 905 B1**
(45) Veröffentlichungstag und Bekanntmachung des Hinweises auf die Patenterteilung: **11.12.2019**
(21) Anmeldenummer: 17173969.1
(22) Anmeldetag: 01.06.2017
(51) Int. Cl.: F01D 25/00, F01D 25/24

(54) **TURBINENZWISCHENGEHÄUSE MIT ZENTRIERELEMENT**
INTERMEDIATE TURBINE HOUSING WITH CENTRING ELEMENT
BOÎTIER INTERMÉDIAIRE DE TURBINE COMPRENANT UN ÉLÉMENT DE CENTRAGE

(43) Veröffentlichungstag der Anmeldung: 05.12.2018
(73) Patentinhaber: MTU Aero Engines AG, 80995 München (DE)
(72) Erfinder: Böck, Alexander, 82288 Kottgeisering (DE)

(56) Entgegenhaltungen:
- EP-A1- 0 513 956
- EP-A2- 0 924 387
- WO-A1-2015/038341
- US-A1- 2016 245 102

## Beschreibung

Die vorliegende Erfindung betrifft ein Turbinenzwischengehäuse für eine Gasturbine, insbesondere Fluggasturbine, mit mehreren ersten Bauteilen und mehreren zweiten Bauteilen, die in Umfangsrichtung abwechselnd nebeneinander angeordnet sind und in Radialrichtung einen Heißgas führenden Strömungskanal begrenzen, wobei die ersten Bauteile jeweils zwei erste Überlappungsabschnitte aufweisen und die zweiten Bauteile jeweils zwei zweite Überlappungsabschnitte aufweisen, derart, dass in einem jeweiligen Bereich des Übergangs von einem ersten Bauteil zu einem zweiten Bauteil oder umgekehrt einer der ersten Überlappungsabschnitte und einer der zweiten Überlappungsabschnitt überlappend angeordnet sind, und mit wenigstens einem Zentrierelement, an dem die ersten Bauteile und die zweiten Bauteile entlang der Umfangsrichtung und in Radialrichtung abgestützt sind, derart, dass die ersten Bauteile und die zweiten Bauteile bezogen auf eine Zentralachse des Turbinenzwischengehäuses im Wesentlichen zentriert angeordnet sind.

Richtungsangaben wie "Axial-" bzw. "axial", "Radial-" bzw. "radial" und "Umfangs-" sind grundsätzlich auf die Maschinenachse der Gasturbine bezogen zu verstehen, sofern sich aus dem Kontext nicht explizit oder implizit etwas anderes ergibt. Die Maschinenachse der Gasturbine kann auch als Zentralachse des Turbinenzwischengehäuses bezeichnet werden. Ein Beispiel von Turbinenzwischengehäuse für eine Gasturbine ist in der Patentschrift EP 0 924 387 gegeben.

Bei Turbinenzwischengehäusen sind die Bauteile des Heißgas führenden Strömungskanals in der Regel mittels sogenannter geschliffenere Überlappungen verbunden. An einem axial vorderen Bereich des Turbinenzwischengehäuses, der auch als Eintritt bezeichnet werden kann, ist es daher erforderlich, diese Bauteile über sogenannte Zentrierleisten, bei denen es sich üblicherweise um Ringsegmente handelt, in Umfangsrichtung zu verbinden. Derartige Zentrierleisten verhindern ein insbesondere radiales Aufklappen und Schwingen im Bereich der geschliffenen Überlappung. Die Zentrierleisten werden dabei axial in Nuten eingeschoben, die an den Bauteilen ausgebildet sind. Ferner werrden die Zentrierleisten durch einen Sicherungsring gesichert.

Im Bereich der Gasturbinen, insbesondere der Turbinenzwischengehäuse für Gasturbinen wird vermehrt der Einsatz von alternativen Werkstoffen, beispielsweise keramischen Faserverbundwerkstoffen (Ceramic Matrix Composites, CMC), untersucht, um Gewichtseinsparungen und Wirkungsgradverbesserungen zu erreichen verglichen mit herkömmlichen Metallbauteilen. Entsprechend kommen oben beschriebene herkömmliche Anordnungen zum Zentrieren der Bauteile aus alternativen Werkstoffen nicht in Frage. Insbesondere ist es schwierig in Bauteilen aus alternativen Werkstoffen, insbesondere aus keramischen Faserverbundwerkstoffen, (radial) schmale Nuten vorzusehen, ohne dass hierdurch Nachteile bei der Festigkeit der Bauteile in Kauf genommen werden müssen.

Aufgabe der Erfindung ist es, ein Turbinenzwischengehäuse bereitzustellen, bei dem die obigen Nachteile in Bezug auf alternative Materialien vermieden werden.

Zur Lösung dieser Aufgabe wird vorgeschlagen, dass die ersten Bauteile und die zweiten Bauteile aus einem keramischen Faserverbundwerkstoff hergestellt sind und dass an jedem ersten Bauteil und an jedem zweiten Bauteil wenigstens ein erster Stützabschnitt und wenigstens ein zweiter Stützabschnitt vorgesehen sind, die in Umfangsrichtung in einem Abstand zueinander angeordnet sind, wobei der erste Stützabschnitt und der zweite Stützabschnitt so ausgebildet sind, dass sie das Zentrierelement in Radialrichtung von unterschiedlichen Seiten beaufschlagen.

Die Anordnung von ersten und zweiten Stützabschnitten in einem Abstand zueinander und das Beaufschlagen bzw. Anliegen der ersten und zweiten Stützabschnitten auf unterschiedlichen Seiten des Zentrierelements ermöglicht über den gesamten Umfang eine sichere Zentrierung der ersten und zweiten Bauteile. Dabei werden die oben bereits beschriebenen bekannten, in Radialrichtung schmalen Nuten sozusagen aufgebrochen bzw. aufgeteilt. Ein erster Stützabschnitt und ein zweiter Stützabschnitt, die das Zentrierelement von unterschiedlichen Seiten an unterschiedlichen Umfangspositionen beaufschlagen, bilden sozusagen die radialen Begrenzungen einer in Umfangsrichtung nicht durchgängig ausgebildeten Nut. Eine in Radialrichtung schmale, insbesondre mit keramischen Faserverbundwerkstoffen schwierig zu fertigende Nut ist daher nicht erforderlich. Insbesondere können der erste Stützabschnitt und der zweite Stützabschnitt jeweils an ausschließlich einer Seite, insbesondere an ausschließlich einer Seite von zwei gegenüberliegenden Seiten, des Zentrierelements und dabei zugleich an unterschiedlichen, insbesondere gegenüberliegenden, Seiten des Zentrierelements anliegen.

Der erste Stützabschnitt und der zweite Stützabschnitt können aus dem keramischen Faserverbundwerkstoff hergestellt sein. Dabei kann der erste Stützabschnitt als radialer Vorsprung, insbesondere als radiale Verdickung, eines betreffenden ersten Bauteils oder eines betreffenden zweiten Bauteils ausgebildet sein. Ein solcher radialer Vorsprung bzw. ein radiale Verdickung kann bei der Herstellung aus keramischem Faserverbundwerkstoff entsprechend laminiert werden.

Ferner können alle radialen Vorsprünge das Zentrierelement in Radialrichtung von einer gleichen ersten Seite her beaufschlagen. Die erste Seite kann dabei die radial äußere Seite oder die radial innere Seite des Zentrierelements sein.

Der zweite Stützabschnitt kann hakenförmig ausgebildet sein, insbesondere als L-förmiger Haken. Ein solcher hakenförmiger Stützabschnitt kann in seinen Dimensionen so gewählt werden, dass er aus dem keramischen Faserverbundwerkstoff hergestellt, insbesondere laminiert werden kann. Dabei können insbesondere gebogene bzw. gekrümmte Bereiche des Hakens mit solchen Radien ausgebildet werden, dass die Laminatschichten in solchen Bereichen nicht geknickt bzw. gebrochen werden. Der L-förmige Haken erstreckt sich ausgehend vom entsprechenden ersten Bauteil oder zweiten Bauteil insbesondere hauptsächlich in Radialrichtung und in Axialrichtung, das heißt, dass die beiden Schenkel des L sich im Wesentlichen in Radialrichtung und in Axialrichtung erstrecken. Diese beiden Schenkel des Hakens können in der jeweiligen Richtung eine Länge aufweisen, die so gewählt ist, dass eine Herstellung aus keramischem Faserverbundwerkstoff möglich ist. Entsprechend kann mit der hakenförmigen Ausgestaltung des zweiten Stützabschnitts eine ausreichende Festigkeit des bzw. der zweiten Stützabschnitts bzw. zweiten Stützabschnitte erreicht werden.

Ferner können alle hakenförmigen zweiten Stützabschnitte das Zentrierelement hintergreifen und in Radialrichtung von einer gleichen zweiten Seite her beaufschlagen. Die zweite Seite kann dabei die radial äußere Seite oder die radial innere Seite des Zentrierelements sein. In jedem Fall sind die oben bereits angesprochene erste Seite und die zweite Seite unterschiedliche (radiale) Seiten des Zentrierelements.

Das Zentrierelement kann einen sich in Axialrichtung und Umfangsrichtung erstreckenden Zentrierabschnitt aufweisen, an dem die ersten Stützabschnitte und die zweiten Stützabschnitte anliegen. Der Zentrierabschnitt entspricht dabei im Wesentlichen einer Art Federelement, das zwischen den ersten und zweiten Stützabschnitten aufgenommen ist, in etwa analog zur Aufnahme einer herkömmlichen Feder in einer herkömmlichen Nut, wobei nochmals darauf hingewiesen wird, dass bei der hier vorgestellten Zentrierung keine durchgehende Nut in den ersten und zweiten Bauteilen vorgesehen ist.

Ferner kann das Zentrierelement entlang der Umfangsrichtung mehrere sich in Radialrichtung zu den ersten Bauteilen oder den zweiten Bauteilen hin erstreckende Dichtungsabschnitte aufweisen. Dabei kann in dem Bereich des Übergangs von einem ersten Bauteil zu einem zweiten Bauteil oder umgekehrt am Zentrierelement eine Aussparung ausgebildet ist, die eine Lücke zwischen zwei benachbarten Dichtungsabschnitten bildet. Ferner können der Zentrierabschnitt und die Dichtungsabschnitte einstückig miteinander ausgebildet sein. Die Dichtungsabschnitte und der Zentrierabschnitt bilden eine Art T-Form, wobei der Zentrierabschnitt die Säule des T bildet und die Dichtungsabschnitte den Querbalken des T.

Es wird weiter vorgeschlagen, dass das Turbinenzwischengehäuse einen Sicherungsring umfasst, der dazu eingerichtet ist, eine Bewegung des Zentrierelements in Axialrichtung zu begrenzen.

Die ersten Bauteile können jeweils zwei erste Stützabschnitte und zwei zweite Stützabschnitte aufweisen, wobei die beiden zweiten Stützabschnitte in Umfangsrichtung zwischen den beiden ersten Stützabschnitten angeordnet sind. Hierdurch liegt ein erstes Bauteil an mindesten vier Stellen am Zentrierabschnitt an und ist in Radialrichtung stabilisiert.

Ferner können die zweite Bauteile jeweils einen ersten Stützabschnitt und zwei zweite Stützabschnitte aufweisen, wobei der erste Stützabschnitt in Umfangsrichtung zwischen den beiden zweiten Stützabschnitten angeordnet ist. Hierdurch liegt ein zweites Bauteil an mindesten drei Stellen am Zentrierabschnitt an und ist in Radialrichtung stabilisiert.

Es wird weiter vorgeschlagen, dass das Zentrierelement, die ersten Stützabschnitte und die zweiten Stützabschnitte bezogen auf die Axialrichtung bzw. Hauptströmungsrichtung im Eintrittsbereich des Turbinenzwischengehäuses angeordnet sind, wobei vorzugsweise die ersten Stützabschnitte und die zweiten Stützabschnitte auf der dem Heißgas führenden Strömungskanal abgewandten Seite der ersten Bauteile und der zweiten Bauteile angeordnet sind.

Schließlich betrifft die Erfindung auch eine Gasturbine, insbesondere Fluggasturbine mit einem oben beschriebenen Turbinenzwischengehäuse, wobei das Turbinenzwischengehäuse zwischen einer ersten Turbinenstufe, insbesondere Hochdruckturbine, und einer folgenden Turbinenstufe, insbesondere Mitteldruck oder Niederdruckturbine, angeordnet ist, wobei vorzugsweise das Zentrierelement, die ersten Stützabschnitte und die zweiten Stützabschnitte sich bezogen auf die Hauptströmungsrichtung der Gasturbine an die erste Turbinenstufe anschließen.

Nachfolgend wird die Erfindung unter Bezugnahme auf die anliegenden Figuren beispielhaft und nicht einschränkend beschrieben.
Fig. 1 zeigt in einer schematischen und vereinfachten Ansicht in Axialrichtung, insbesondere in einer Übersicht und einer vergrößerten Detailansicht (strichpunktiert umrandet), erste und zweite Bauteile eines Strömungskanals eines Turbinenzwischengehäuses mit ihrem Überlappungsbereich und dem Zentrierelement.
Fig. 2 zeigt in den Teilfiguren A) bis C) drei vergrößerte Schnittdarstellungen etwa entsprechend den Schnittlinien A-A, B-B und C-C der Fig. 1.

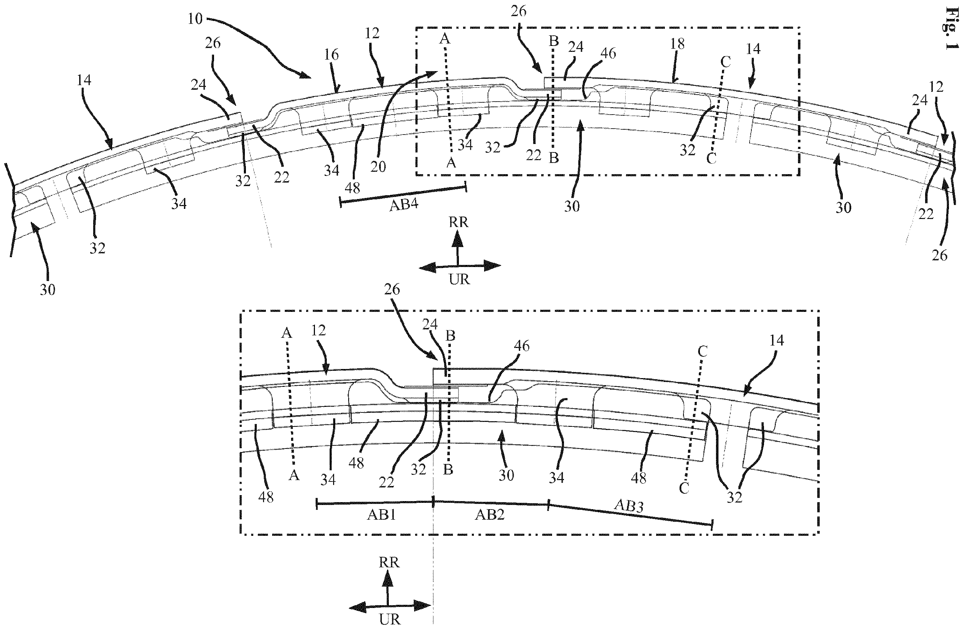

Fig. 1 zeigt einen Ausschnitt eines Turbinenzwischengehäuses 10 mit einem ersten Bauteil 12 und einem zweiten Bauteil 14. Das erste Bauteil 12 und das zweite Bauteil 14 sind in Umfangsrichtung UR nebeneinander angeordnet. Wie aus der Darstellung ersichtlich bildet eine abwechselnde Abfolge von ersten Bauteilen 12 und zweiten Bauteilen 14 in Schnittansicht einen im Wesentlichen geschlossenen Ring, der aber nur abschnittsweise in der Fig. 1 dargestellt ist.

Die ersten Bauteile 12 und die zweiten Bauteile 14 weisen eine jeweilige Seite 16, 18 auf, die einem Heißgas führenden Strömungskanal 20 zugewandt ist. Anders ausgedrückt begrenzen die ersten Bauteile 12 und die zweiten Bauteile 14 den Heißgas führenden Strömungskanal 20. Die hier dargestellten ersten Bauteile 12 und die zweiten Bauteile 14 bilden eine radial innere Begrenzung des Heißgas führenden Strömungskanals 20. Auf der vom Heißgas führenden Strömungskanal 20 abgewandten Seite sind die Bauteile 12, 14 mit nicht dargestellten Strukturbauteilen des Turbinenzwischengehäuses 10 verbunden, die um eine Welle der Gasturbine angeordnet sind. Es wird darauf hingewiesen, dass die Bauteile 12, 14 nicht nur radial innen eingesetzt werden können (bezogen auf den Strömungskanal 20 mit einer konvexen Krümmung), sondern dass sie auch als radial äußere Begrenzung des Heißgas führenden Strömungskanals dienen können, wobei die Bauteile 12, 14 in einem solchen Fall entsprechend eine andere Krümmung (bezogen auf den Strömungskanal 20 konkav) aufweisen würden als die in Fig. 1 dargestellten Bauteile 12, 14.

Die ersten Bauteile 12 weisen jeweilige erste Überlappungsabschnitte 22 auf. Die zweiten Bauteile 14 weisen jeweilige zweite Überlappungsabschnitte 24 auf. An einem Übergang 26 von einem ersten Bauteil 12 zu einem zweiten Bauteil 14 sind der erste Überlappungsabschnitt 22 und der zweite Überlappungsabschnitt 24 in Radialrichtung RR übereinander angeordnet. Der erste Überlappungsabschnitt 22 und der zweite Überlappungsabschnitt 24 liegen aneinander an, so dass der Heißgas führende Strömungskanal 20 im Wesentlichen abgedichtet ist. Die Überlappung bei den Übergängen 26 ist so gewählt, dass sie auch bei Expansion bzw. Kontraktion der ersten Bauteile 12 bzw. der zweiten Bauteile 14 aufgrund thermischer Einwirkung erhalten bleibt. Mit anderen Worten sind die ersten Bauteile 12 und die zweiten Bauteile 14 wenigstens in Umfangsrichtung UR relativ zueinander beweglich.

Die ersten Bauteile 12 und die zweiten Bauteile 14 sind aus einem keramischen Faserverbundwerkstoff hergestellt, der nachfolgend als CMC angesprochen wird. Da Bauteile aus CMC in der Regel durch Laminieren von verschiedenen Schichten hergestellt werden, wobei insbesondere auch dem Verlauf der Fasern entsprechend der Formgebung des fertigen Bauteils Rechnung getragen werden muss, ist es erforderlich, die ersten und zweiten Bauteile 12, 14 so zu gestalten, dass sowohl deren Herstellung aus CMC möglich ist, als auch deren Zentrierung bezogen auf die Maschinenachse gewährleistet werden kann.

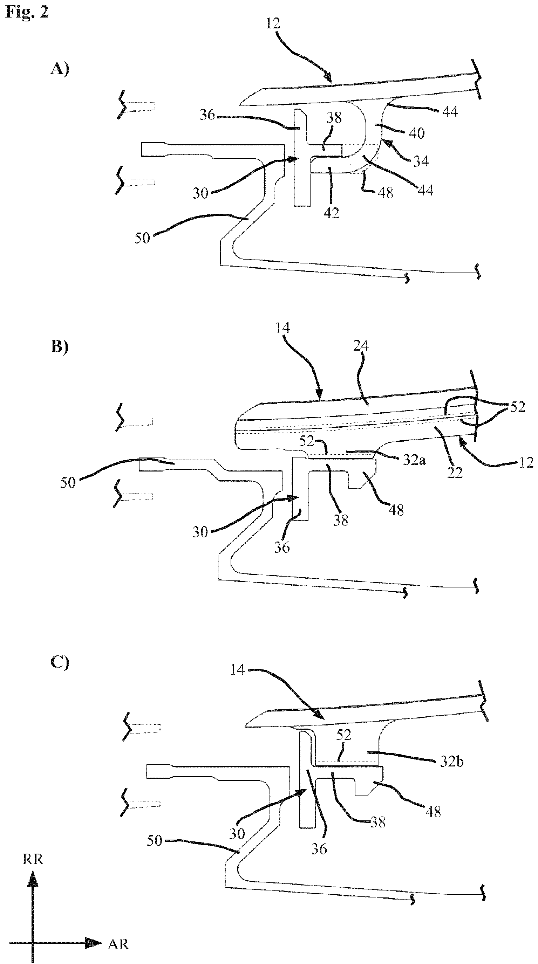

Für die Zentrierung der ersten und zweiten Bauteile 12, 14 umfasst das Turbinenzwischengehäuse 10 wenigstens ein Zentrierelement 30, vorzugsweise mehrere Zentrierelemente 30, an dem die ersten und zweiten Bauteile 12, 14 abgestützt werden können. Das Zentrierelement 30 und die Anordnung der ersten und zweiten Bauteile 12, 14 an dem Zentrierelement 30 wird nachfolgend auch unter Bezugnahme auf die Schnittdarstellungen der Fig. 2A bis 2C erläutert.

Es können auch mehrere Zentrierelemente 30 verwendet werden, wie dies in der Figur 1 dargestellt ist. Die Zentrierelemente 30 können insbesondere als Zentrierleisten und/oder als Ringsegmente ausgebildet sein.

Sowohl das erste Bauteil 12, als auch das zweite Bauteil 14 weisen jeweilige erste Stützabschnitte 32 und jeweilige zweite Stützabschnitte 34 auf. Dabei liegen die ersten Stützabschnitte 32 von der einen Seite an dem betreffenden Zentrierelement 30 an, im Ausführungsbeispiel von radial außen. Die zweite Stützabschnitte 34 liegen von der anderen Seite an dem betreffenden Zentrierelement 30 an, im Ausführungsbeispiel von radial innen.

Unter erneuter Bezugnahme auf die Fig. 1 ist ersichtlich, dass die ersten Stützabschnitte 32 und die zweiten Stützabschnitte 34 allgemein mit einem Abstand AB in Umfangsrichtung UR zueinander angeordnet sind. Bezogen auf den vergrößerten Ausschnitt der Fig. 1 sind der zweite Stützabschnitt 34 (links in der Darstellung) und der erste Stützabschnitt 32 des ersten Bauteils 12 mit einem Abstand AB1 zueinander angeordnet. Zwischen dem ersten Stützabschnitt 32 des ersten Bauteils 12 und dem zweiten Stützabschnitt 34 des zweiten Bauteils 14 ist ein Abstand AB2 vorgesehen. Ferner ist zwischen dem zweiten Stützabschnitt 34 des zweiten Bauteils 14 und dem ersten Stützabschnitt 32 des zweiten Bauteils 14 ein Abstand AB3 vorgesehen. Wie aus der Fig. 1 ersichtlich, sind die ersten Stützabschnitte 32 und die zweiten Stützabschnitte 34 nicht zwingend abwechselnd angeordnet. Vielmehr ist es auch möglich, dass zwei gleiche Stützabschnitte in Umfangsrichtung UR aufeinander folgen. Ein Beispiel hierfür sind in der vorliegenden Ausführungsform jeweils zwei zweite Stützabschnitte 34 am ersten Bauteil 12. Die Abstände AB1, AB2, AB3 können im Wesentlichen gleich sein oder sie können voneinander verschieden sein. Bei der vorliegenden Ausführungsform sind die Abstände AB1 und AB2 im Wesentlichen gleich gewählt. Der Abstand AB3 ist etwas größer gewählt als die Abstände AB1 und AB2. Ein weiterer Abstand AB4 zwischen den beiden zweiten Stützabschnitten des ersten Bauteils 12 ist noch etwas größer gewählt als der Abstand AB3. Ein Abstand AB kann dabei eine gerade Verbindungslinie sein, die zwei Punkte verbindet mit gleichem radialen Abstand von der Maschinenachse, wobei die beiden Punkte bezogen auf eine Ausdehnung in Umfangsrichtung des betreffenden Stützabschnitts beispielsweise etwa mittig angeordnet ist. Das betreffende Zentrierelement 30 ist somit wechselseitig und abschnittsweise von ersten Stützabschnitten 32 und von zweiten Stützabschnitten 34 beaufschlagt.

Bei der hier vorgestellten Ausführungsform weist das erste Bauteil in Umfangsrichtung UR gesehen zwei zweite Stützabschnitte 34 auf, die zwischen zwei ersten Stützabschnitten 32 angeordnet sind. Das zweite Bauteil weist einen ersten Stützabschnitt 32 auf, der zwischen zwei zweiten Stützabschnitten 34 angeordnet ist. Es wird darauf hingewiesen, dass die Anzahl der ersten und zweiten Stützabschnitte 32, 34 pro Bauteil 12, 14 veränderbar bzw. wählbar ist. Wird beispielsweise daran gedacht, dass die ersten und zweiten Bauteile 12, 14 als radial äußere Begrenzung des Heißgas führenden Strömungskanals ausgeführt sind (hier nicht dargestellt), sind aufgrund des größeren Umfangs entweder mehr Stützabschnitte 32, 34 pro Bauteil 12, 14 vorzusehen oder/und die Abstände zwischen den Stützabschnitten 32, 34 sind zu vergrößern bzw. zu verändern.

Das Zentrierelement 30 weist einen im Wesentlichen T-förmigen Querschnitt auf mit einem Dichtungsabschnitt 36 und einem Zentrierabschnitt 38. Der Dichtungsabschnitt 36 erstreckt sich im Wesentlichen in Radialrichtung RR und Umfangsrichtung UR. Der Zentrierabschnitt 38 erstreckt sich im Wesentlichen in Axialrichtung AR und Umfangsrichtung UR. Der Zentrierabschnitt 38 und der Dichtungsabschnitt 36 sind im Wesentlichen orthogonal zueinander angeordnet. Der Dichtungsabschnitt 36 dient insbesondere dazu, Fluidströmungen außerhalb des Heißgas führenden Strömungskanals einzuschränken. Am Zentrierabschnitt 38 sind die ersten und zweiten Stützabschnitte 32, 34 der betreffenden ersten bzw. zweiten Bauteile 12, 14 abgestützt.

Im Bereich des Schnitts A-A (Fig. 1), der in der Fig. 2A dargestellt ist, hintergreift der zweite Stützabschnitt 34 den Lagerabschnitt 38 des Zentrierelements 30. Der zweite Stützabschnitt 34 ist hakenförmig ausgebildet, insbesondere weist er eine L-form auf. Der zweite Stützabschnitt 34 weist einen mit dem ersten Bauteil 14 verbundenen Basisabschnitt 40 und einen mit dem Zentrierabschnitt 38 in Verbindung stehenden Eingriffsabschnitt 42 auf. Die Übergänge bzw. Krümmungen 44 zwischen dem ersten Bauteil 12 und dem Basisabschnitt 40 bzw. zwischen dem Basisabschnitt 40 und dem Eingriffsabschnitt 42 sind dabei so gewählt, dass die Fasern des CMC-Materials an diesen Stellen entsprechend gebogen, aber nicht geknickt oder gebrochen sind, so dass der zweite Stützabschnitt 34 eine gewünschte Stabilität und Festigkeit aufweist. Der zweite Stützabschnitt 34 dient im vorliegenden Beispiel insbesondere dazu, eine Bewegung des ersten Bauteils 12 nach radial außen zu verhindern. Es wird darauf hingewiesen, dass ein zweiter Stützabschnitt 34, der an einem zweiten Bauteil 14 vorgesehen ist, in der Schnittdarstellung im Wesentlichen gleich bzw. analog aufgebaut ist, wie dies in der Fig. 2A für den zweiten Stützabschnitt 34 des ersten Bauteils 12 dargestellt ist.

Die Schnittansicht der Fig. 2B zeigt den Schnitt entsprechend der Schnittlinie B-B der Fig. 1 im Übergangsbereich 26 zwischen dem ersten Bauteil 12 und dem zweiten Bauteil 14. Aus der Darstellung ist ersichtlich, dass die beiden Überlappungsabschnitte 22, 24 in Radialrichtung RR übereinander angeordnet sind. Die Überlappungsabschnitte 22, 24 liegen im Übergangsbereich 26 aneinander an. Am ersten Bauteil 12, das hier mit seinem Überlappungsabschnitt 22 radial innen angeordnet ist, weist einen ersten Stützabschnitt 32a auf, der als eine Art Verdickung oder Vorsprung in Radialrichtung RR ausgeführt ist. Der erste Stützabschnitt 32a liegt auf dem Zentrierabschnitt 38 des Zentrierelements 30 auf. Anders ausgedrückt wird das Zentrierelement 30 bzw. dessen Zentrierabschnitt 38 von radial außen durch den ersten Stützabschnitt 32a beaufschlagt. Aufgrund der im Übergangsbereich 26 vorhandenen Überlappung der der beiden Bauteile 12, 14, ist der Dichtungsabschnitt 36 in diesem Bereich mit einer Aussparung 46 versehen. Entsprechend weist das Zentrierelement 30 in diesem Bereich eine etwas unvollständige T-Form auf.

Schließlich zeigt die Schnittdarstellung der Fig. 2C den Schnitt entsprechend der Schnittlinie C-C der Fig. 1. Am Zentrierabschnitt 38 liegt von radial außen ein erster Stützabschnitt 32b des zweiten Bauteils 14 an. Der erste Stützabschnitt 32b ist als radiale Verdickung bzw. als Vorsprung ausgebildet. Dabei ist die Verdickung so gewählt, dass mittels des ersten Stützabschnitts 32b die radiale Höhe des Dichtungsabschnitts 36 überbrückt werden kann. Der erste Stützabschnitt 32a des ersten Bauteils (Fig. 2B) und der erste Stützabschnitt 32b des zweiten Bauteils 14 (Fig. 2C) unterscheiden sich im Wesentlichen nur durch ihre radiale Ausdehnung bzw. Dicke. Ihre Funktion und die Art der Ausgestaltung als Vorsprung bzw. Verdickung ist im Wesentlichen gleich.

Aus der Zusammenschau der Fig. 1 und 2 und der daraus ersichtlichen Abfolge von ersten und zweiten Stützabschnitten 32, 34 ist ersichtlich, dass hierdurch die ersten und zweiten Bauteile 12, 14 am betreffenden Zentrierelement 30, insbesondere dessen Zentrierabschnitt 38 so abgestützt sind, dass sie in Radialrichtung RR im Wesentlichen unbeweglich sind relativ zum Zentrierelement 30. Die Abfolge von ersten Stützabschnitten 32 und zweiten Stützabschnitten, die den Zentrierabschnitt 38 jeweils von unterschiedlichen Seiten (von radial innen oder radial außen) beaufschlagen, ermöglichen also eine gewünschte Zentrierung der ersten und zweiten Bauteile 12, 14 bezogen auf eine Maschinenachse. Ferner wird durch diese radiale Fixierung ein radiales Aufklappen der Bauteile 12, 14, insbesondere im Übergangsbereich 26 (Überlappung) verhindert.

Aus den Fig. 2A bis 2C ist noch ein Sicherungsabschnitt 48 ersichtlich, der entlang der Umfangsrichtung UR abschnittsweise am Zentrierabschnitt 38 des Zentrierelements 30 ausgebildet ist. Der Sicherungsabschnitt 48 dient insbesondere dazu, in Umfangrichtung UR als Anschlag an zweite Stützabschnitte 34 zu dienen. Entsprechend ist eine Bewegung in Umfangsrichtung UR der Zentrierelemente 30 relativ zu den Bauteilen 12, 14 eingeschränkt.

Der Vollständigkeit halber wird noch darauf hingewiesen, dass in den Fig. 2A bis 2C ein sogenannter Sicherungsring 50 dargestellt ist, durch den die Zentrierelement 30 axial in ihrer Bewegung eingeschränkt werden bzw. in ihrer gewünschten Position gehalten werden. Ferner sind in den Fig. 2A bis 2C gestrichelte Linien 52 dargestellt, insbesondere für die Überlappungsbereiche 22, 24 und die ersten Stützabschnitte 32a, 32b. Diese gestrichelten Linien 52 zeigen rein schematisch eine Materialverdickung an den entsprechenden Stellen der Bauteile 12, 14, wobei diese Materialverdickungen bei Bedarf abgetragen werden können, um Toleranzen bei der Endmontage von CMC-Bauteilen ausgleichen zu können.

Die hier dargestellte Zentrierung von Bauteilen 12, 14 ist in Bezug auf eine Hauptströmungsrichtung in dem Turbinenzwischengehäuse 10 vorne bzw. an einer Eintrittsöffnung vorgesehen. Eine solche Eintrittsöffnung folgt in Strömungsrichtung in der Regel auf eine erste Turbinenstufe, insbesondere eine Hochdruckturbine. Die hier dargestellten ersten und zweiten Bauteile 12, 14 samt ihrer ersten bzw. zweiten Stützabschnitte 32, 34 sind aus einem keramischen Faserverbundwerkstoff (CMC) hergestellt, wobei die Form und Anordnung der Stützabschnitte 32, 34 so gewählt ist, dass diese aus CMC herstellbar sind und für ihre Funktion entsprechende Festigkeits- und Stabilitätsanforderungen erfüllen.

### Bezugszeichenliste

- 10: Turbinenzwischengehäuse
- 12: erstes Bauteil
- 14: zweites Bauteil
- 16: Strömungskanal zugewandte Seite
- 18: Strömungskanal zugewandte Seite
- 20: Strömungskanal
- 22: erster Überlappungsabschnitt
- 24: zweiter Überlappungsabschnitt
- 26: Übergangsbereich
- 30: Zentrierelement
- 32, 32a, 32b: erster Stützabschnitt
- 34: zweiter Stützabschnitt
- 36: Dichtungsabschnitt
- 38: Zentrierabschnitt
- 40: Basisabschnitt
- 42: Eingriffsabschnitt
- 44: Krümmung
- 46: Aussparung
- 48: Sicherungsabschnitt
- 50: Sicherungsring
- 52: Materialverdickung (gestrichelte Linie)

## Patentansprüche

1. Turbinenzwischengehäuse für eine Gasturbine, insbesondere Fluggasturbine, mit
mehreren ersten Bauteilen (12) und mehreren zweiten Bauteilen (14), die in Umfangsrichtung (UR) abwechselnd nebeneinander angeordnet sind und in Radialrichtung (RR) einen Heißgas führenden Strömungskanal (20) begrenzen, wobei die ersten Bauteile (12) jeweils zwei erste Überlappungsabschnitte (22) aufweisen und die zweiten Bauteile (14) jeweils zwei zweite Überlappungsabschnitte (24) aufweisen, derart, dass in einem jeweiligen Bereich (26) des Übergangs von einem ersten Bauteil (12) zu einem zweiten Bauteil (14) oder umgekehrt einer der ersten Überlappungsabschnitte (22) und einer der zweiten Überlappungsabschnitte (24) überlappend angeordnet sind, und
mit wenigstens einem Zentrierelement (30), an dem die ersten Bauteile (12) und die zweiten Bauteile (14) entlang der Umfangsrichtung (UR) und in Radialrichtung (RR) abgestützt sind, derart, dass die ersten Bauteile (12) und die zweiten Bauteile (14) bezogen auf eine Zentralachse des Turbinenzwischengehäuses (10) im Wesentlichen zentriert angeordnet sind,
**dadurch gekennzeichnet, dass** die ersten Bauteile (12) und die zweiten Bauteile (14) aus einem keramischen Faserverbundwerkstoff (CMC) hergestellt sind und dass an jedem ersten Bauteil (12) und an jedem zweiten Bauteil (14) wenigstens ein erster Stützabschnitt (32) und wenigstens ein zweiter Stützabschnitt (34) vorgesehen sind, die in Umfangsrichtung (UR) in einem Abstand (AB) zueinander angeordnet sind, wobei der erste Stützabschnitt (32) und der zweite Stützabschnitt (34) so ausgebildet sind, dass sie das Zentrierelement (30) in Radialrichtung (RR) von unterschiedlichen Seiten beaufschlagen.

2. Turbinenzwischengehäuse nach Anspruch 1, **dadurch gekennzeichnet, dass** der erste Stützabschnitt (32) und der zweite Stützabschnitt (34) aus dem keramischen Faserverbundwerkstoff (CMC) hergestellt sind.

3. Turbinenzwischengehäuse nach Anspruch 1 oder 2, **dadurch gekennzeichnet, dass** der erste Stützabschnitt (32) als radialer Vorsprung (32a, 32b), insbesondere als radiale Verdickung, eines betreffenden ersten Bauteils (12) oder eines betreffenden zweiten Bauteils (14) ausgebildet ist.

4. Turbinenzwischengehäuse nach Anspruch 3, **dadurch gekennzeichnet, dass** alle radialen Vorsprünge (32a, 32b) das Zentrierelement (30) in Radialrichtung (RR) von einer gleichen ersten Seite her beaufschlagen.

5. Turbinenzwischengehäuse nach einem der vorhergehenden Ansprüche, **dadurch gekennzeichnet, dass** der zweite Stützabschnitt (34) hakenförmig ausgebildet ist, insbesondere als L-förmiger Haken.

6. Turbinenzwischengehäuse nach Anspruch 5, **dadurch gekennzeichnet, dass** alle hakenförmigen zweiten Stützabschnitte (34) das Zentrierelement (30) hintergreifen und in Radialrichtung von einer gleichen zweiten Seite her beaufschlagen.

7. Turbinenzwischengehäuse nach einem der vorhergehenden Ansprüche, **dadurch gekennzeichnet, dass** das Zentrierelement (30) einen sich in Axialrichtung (AR) und Umfangsrichtung (UR) erstreckenden Zentrierabschnitt (38) aufweist, an dem die ersten Stützabschnitte (32) und die zweiten Stützabschnitte (34) anliegen.

8. Turbinenzwischengehäuse nach einem der vorhergehenden Ansprüche, **dadurch gekennzeichnet, dass** das Zentrierelement (30) entlang der Umfangsrichtung (UR) mehrere sich in Radialrichtung (RR) zu den ersten Bauteilen (12) oder den zweiten Bauteilen (14) hin erstreckende Dichtungsabschnitte (36) aufweist.

9. Turbinenzwischengehäuse nach Anspruch 8, **dadurch gekennzeichnet, dass** in dem Bereich (26) des Übergangs von einem ersten Bauteil (12) zu einem zweiten Bauteil (14) oder umgekehrt am Zentrierelement (30) eine Aussparung (46) ausgebildet ist, die eine Lücke zwischen zwei benachbarten Dichtungsabschnitten (36) bildet.

10. Turbinenzwischengehäuse nach einem der Ansprüche 7 bis 9, **dadurch gekennzeichnet, dass** der Zentrierabschnitt (38) und die Dichtungsabschnitte (36) einstückig miteinander ausgebildet sind.

11. Turbinenzwischengehäuse nach einem der vorhergehenden Ansprüche, **dadurch gekennzeichnet, dass** es ferner einen Sicherungsring (50) umfasst, der dazu eingerichtet ist, eine Bewegung des Zentrierelements (30) in Axialrichtung zu begrenzen.

12. Turbinenzwischengehäuse nach einem der vorhergehenden Ansprüche, **dadurch gekennzeichnet, dass** die ersten Bauteile (12) jeweils zwei erste Stützabschnitte (32a) und zwei zweite Stützabschnitte (34) aufweisen, wobei die beiden zweiten Stützabschnitte (34) in Umfangsrichtung zwischen den beiden ersten Stützabschnitten (32a) angeordnet sind.

13. Turbinenzwischengehäuse nach einem der vorhergehenden Ansprüche, **dadurch gekennzeichnet, dass** die zweite Bauteile (14) jeweils einen ersten Stützabschnitt (32b) und zwei zweite Stützabschnitte (34) aufweisen, wobei der erste Stützabschnitt (32b) in Umfangsrichtung zwischen den beiden zweiten Stützabschnitten (34) angeordnet ist.

14. Turbinenzwischengehäuse nach einem der vorhergehenden Ansprüche, **dadurch gekennzeichnet, dass** das Zentrierelement (30), die ersten Stützabschnitte (32) und die zweiten Stützabschnitte (34) bezogen auf die Axialrichtung (AR) bzw. Hauptströmungsrichtung im Eintrittsbereich des Turbinenzwischengehäuses (10) angeordnet sind, wobei vorzugsweise die ersten Stützabschnitte (32) und die zweiten Stützabschnitte (34) auf der dem Heißgas führenden Strömungskanal (20) abgewandten Seite der ersten Bauteile (12) und der zweiten Bauteile (14) angeordnet sind.

15. Gasturbine, insbesondere Fluggasturbine mit einem Turbinenzwischengehäuse (10) nach einem der vorhergehenden Ansprüche, wobei das Turbinenzwischengehäuse (10) zwischen einer ersten Turbinenstufe, insbesondere Hochdruckturbine, und einer folgenden Turbinenstufe, insbesondere Mitteldruck oder Niederdruckturbine, angeordnet ist, wobei vorzugsweise das Zentrierelement (30), die ersten Stützabschnitte (32) und die zweiten Stützabschnitte (34) sich bezogen auf die Hauptströmungsrichtung der Gasturbine an die erste Turbinenstufe anschließen.

## Claims

1. Intermediate turbine housing for a gas turbine, in particular a gas turbine for an aircraft, comprising a plurality of first components (12) and a plurality of second components (14), which are arranged alternately side-by-side in the circumferential direction (UR) and delimit a flow channel (20) in the radial direction (RR) for conducting hot gas, the first components (12) each having two first overlapping portions (22) and the second components (14) each having two second overlapping portions (24) such that, in a relevant region (26) of the transition from a first component (12) to a second component (14) or vice versa, one of the first overlapping portions (22) and one of the second overlapping portions (24) are arranged so as to overlap, and comprising at least one centering element (30) on which the first components (12) and the second components (14) are supported in the circumferential direction (UR) and in the radial direction (RR) such that the first components (12) and the second components (14) are arranged so as to be substantially centered with respect to a central axis of the intermediate turbine housing (10), **characterized in that** the first components (12) and the second components (14) are made from a ceramic fiber composite material (CMC), and **in that** at least one first support portion (32) and at least one second support portion (34) are provided on each first component (12) and on each second component (14), which support portions are arranged in the circumferential direction (UR) at a distance (AB) from one other, the first support portion (32) and the second support portion (34) being formed such that they impinge on the centering element (30) in the radial direction (RR) from different sides.

2. Intermediate turbine housing according to claim 1, **characterized in that** the first support portion (32) and the second support portion (34) are made from the ceramic fiber composite material (CMC).

3. Intermediate turbine housing according to either claim 1 or claim 2, **characterized in that** the first support portion (32) is formed as a radial projection (32a, 32b), in particular as a radial thickening, of a relevant first component (12) or of a relevant second component (14).

4. Intermediate turbine housing according to claim 3, **characterized in that** all the radial projections (32a, 32b) impinge on the centering element (30) in the radial direction (RR) from the same first side.

5. Intermediate turbine housing according to any of the preceding claims, **characterized in that** the second support portion (34) is hook-shaped, in particular is an L-shaped hook.

6. Intermediate turbine housing according to claim 5, **characterized in that** all the hook-shaped second support portions (34) engage the centering element (30) from behind and impinge on the centering element in the radial direction from the same second side.

7. Intermediate turbine housing according to any of the preceding claims, **characterized in that** the centering element (30) has a centering portion (38) which extends in the axial direction (AR) and the circumferential direction (UR) and which the first support portions (32) and the second support portions (34) abut.

8. Intermediate turbine housing according to any of the preceding claims, **characterized in that** the centering element (30) has a plurality of sealing portions (36) in the circumferential direction (UR) that extend in the radial direction (RR) to the first components (12) or the second components (14).

9. Intermediate turbine housing according to claim 8, **characterized in that**, in the region (26) of the transition from a first component (12) to a second component (14) or vice versa, a recess (46) is formed in the centering element (30) which forms a gap between two adjacent sealing portions (36).

10. Intermediate turbine housing according to any of claims 7 to 9, **characterized in that** the centering portion (38) and the sealing portions (36) are formed in one piece.

11. Intermediate turbine housing according to any of the preceding claims, **characterized in that** it further comprises a retaining ring (50) which is designed to limit a movement of the centering element (30) in the axial direction.

12. Intermediate turbine housing according to any of the preceding claims, **characterized in that** the first components (12) each have two first support portions (32a) and two second support portions (34), the two second support portions (34) being arranged in the circumferential direction between the two first support portions (32a).

13. Intermediate turbine housing according to any of the preceding claims, **characterized in that** the second components (14) each have a first support portion (32b) and two second support portions (34), the first support portion (32b) being arranged in the circumferential direction between the two second support portions (34).

14. Intermediate turbine housing according to any of the preceding claims, **characterized in that** the centering element (30), the first support portions (32) and the second support portions (34) are arranged, relative to the axial direction (AR) or main flow direction, in the inlet region of the intermediate turbine housing (10), the first support portions (32) and the second support portions (34) preferably being arranged on the side of the first components (12) and the second components (14) that faces away from the flow channel (20) conducting hot gas.

15. Gas turbine, in particular a gas turbine for an aircraft, comprising an intermediate turbine housing (10) according to any of the preceding claims, wherein the intermediate turbine housing (10) is arranged between a first turbine stage, in particular a high-pressure turbine, and a following turbine stage, in particular a medium-pressure or low-pressure turbine, wherein the centering element (30), the first support portions (32) and the second support portions (34) preferably adjoin the first turbine stage with respect to the main flow direction of the gas turbine.

## Revendications

1. Boîtier intermédiaire de turbine pour une turbine à gaz, notamment une turbine à gaz d'avion, comprenant plusieurs premiers composants (12) et plusieurs seconds composants (14), qui sont disposés côte à côte en alternance dans la direction circonférentielle (UR) et qui délimitent un conduit d'écoulement de gaz chaud (20) dans la direction radiale (RR), les premiers composants (12) présentant chacun deux premières sections de chevauchement (22) et les seconds composants (14) présentant chacun deux secondes sections de chevauchement (24), de telle sorte que dans une région respective (26) de la transition d'un premier composant (12) à un second composant (14) ou inversement, une des premières sections de chevauchement (22) et une des secondes sections de chevauchement (24) se chevauchent, et comprenant au moins un élément de centrage (30) sur lequel les premiers composants (12) et les seconds composants (14) sont supportés dans la direction circonférentielle (UR) et dans la direction radiale (RR), de telle sorte que les premiers composants (12) et les seconds composants (14) sont sensiblement centrés par rapport à un axe central du boîtier intermédiaire de turbine (10), **caractérisé en ce que** les premiers composants (12) et les seconds composants (14) sont réalisés en un matériau composite céramique à fibres (CMC), et **en ce que**, sur chaque premier composant (12) et sur chaque second composant (14), sont prévues au moins une première section d'appui (32) et au moins une seconde section d'appui (34), lesquelles sont disposées dans la direction circonférentielle (UR) à une distance (AB) l'une de l'autre, la première section d'appui (32) et la seconde section d'appui (34) étant conçues de manière à solliciter l'élément de centrage (30) dans la direction radiale (RR) de différents côtés.

2. Boîtier intermédiaire de turbine selon la revendication 1, **caractérisé en ce que** la première section d'appui (32) et la seconde section d'appui (34) sont réalisées en matériau composite céramique à fibres (CMC).

3. Boîtier intermédiaire de turbine selon la revendication 1 ou 2, **caractérisé en ce que** la première section d'appui (32) est conçue sous la forme d'une saillie radiale (32a, 32b), en particulier d'un épaississement radial, d'un premier composant respectif (12) ou d'un second composant respectif (14).

4. Boîtier intermédiaire de turbine selon la revendication 3, **caractérisé en ce que** toutes les saillies radiales (32a, 32b) sollicitent l'élément de centrage (30) dans la direction radiale (RR) à partir d'un même premier côté.

5. Boîtier intermédiaire de turbine selon l'une des revendications précédentes, **caractérisé en ce que** la seconde section d'appui (34) est en forme de crochet, en particulier en forme de crochet en L.

6. Boîtier intermédiaire de turbine selon la revendication 5, **caractérisé en ce que** toutes les secondes sections d'appui en forme de crochet (34) s'engagent derrière l'élément de centrage (30) et le sollicitent dans la direction radiale à partir d'un même second côté.

7. Boîtier intermédiaire de turbine selon l'une des revendications précédentes, **caractérisé en ce que** l'élément de centrage (30) présente une section de centrage (38) s'étendant dans la direction axiale (AR) et dans la direction circonférentielle (UR), sur laquelle reposent les premières sections d'appui (32) et les secondes sections d'appui (34).

8. Boîtier intermédiaire de turbine selon l'une des revendications précédentes, **caractérisé en ce que** l'élément de centrage (30) présente, dans la direction circonférentielle (UR), plusieurs sections d'étanchéité (36) s'étendant dans la direction radiale (RR) vers les premiers composants (12) ou vers les seconds composants (14).

9. Boîtier intermédiaire de turbine selon la revendication 8, **caractérisé en ce que**, dans la région (26) de la transition d'un premier composant (12) à un second composant (14) ou inversement, un évidement (46), qui forme un espace entre deux sections d'étanchéité adjacentes (36), est réalisé sur l'élément de centrage (30).

10. Boîtier intermédiaire de turbine selon l'une des revendications 7 à 9, **caractérisé en ce que** la section de centrage (38) et les sections d'étanchéité (36) sont formées d'une seule pièce, l'une avec l'autre.

11. Boîtier intermédiaire de turbine selon l'une des revendications précédentes, **caractérisé en ce qu'**il comporte en outre une bague de blocage (50) conçue pour limiter un déplacement de l'élément de centrage (30) dans la direction axiale.

12. Boîtier intermédiaire de turbine selon l'une des revendications précédentes, **caractérisé en ce que** les premiers composants (12) présentent chacun deux premières sections d'appui (32a) et deux secondes sections d'appui (34), les deux secondes sections d'appui (34) étant disposées dans la direction circonférentielle entre les deux premières sections d'appui (32a).

13. Boîtier intermédiaire de turbine selon l'une des revendications précédentes, **caractérisé en ce que** les seconds composants (14) présentent chacun une première section d'appui (32b) et deux secondes sections d'appui (34), la première section d'appui (32b) étant disposée dans la direction circonférentielle entre les deux secondes sections d'appui (34).

14. Boîtier intermédiaire de turbine selon l'une des revendications précédentes, **caractérisé en ce que** l'élément de centrage (30), les premières sections d'appui (32) et les secondes sections d'appui (34) sont disposés, par rapport à la direction axiale (AR) ou à la direction principale d'écoulement, dans la région d'entrée du boîtier intermédiaire de turbine (10), les premières sections d'appui (32) et les secondes sections d'appui (34) étant de préférence sur le côté opposé au conduit d'écoulement de gaz chaud (20) des premiers composants (12) et des seconds composants (14).

15. Turbine à gaz, notamment turbine à gaz d'avion comprenant un boîtier intermédiaire de turbine (10) selon l'une des revendications précédentes, le boîtier intermédiaire de turbine (10) étant disposé entre un premier étage de turbine, notamment une turbine haute pression, et un étage de turbine suivant, notamment une turbine à moyenne ou basse pression, de préférence l'élément de centrage (30), les premières sections d'appui (32) et les secondes sections d'appui (34) étant raccordés au premier étage de turbine par rapport à la direction principale d'écoulement de la turbine à gaz.
